# EUROPÄISCHE PATENTSCHRIFT

(11) **EP 3 655 982 B1**
(45) Veröffentlichungstag und Bekanntmachung des Hinweises auf die Patenterteilung: **26.04.2023**
(21) Anmeldenummer: 18769057.3
(22) Anmeldetag: 24.08.2018
(51) Int. Cl.: H01H 33/53, H02B 1/50, H02B 5/02

(54) **BASISTRÄGER FÜR EINEN LEISTUNGSSCHALTER**
BASE SUPPORT FOR A CIRCUIT BREAKER
SUPPORT DE BASE POUR DISJONCTEUR

(30) Priorität: 18.09.2017 DE 102017216487
(43) Veröffentlichungstag der Anmeldung: 27.05.2020
(73) Patentinhaber: Siemens Energy Global GmbH & Co. KG, 81739 München (DE)
(72) Erfinder: HOLLER, Helmut, 10178 Berlin (DE); JAN, Alexander, 13629 Berlin (DE); JENICHEN, Henry, 10553 Berlin (DE); WOLF, Henry, 13086 Berlin (DE)
(86) Internationale Anmeldenummer: PCT/EP2018/072919
(87) Internationale Veröffentlichungsnummer: WO 2019/052796

(56) Entgegenhaltungen:
- EP-A1- 0 520 593
- CH-A- 349 663
- DE-C- 682 030

## Beschreibung

Die Erfindung betrifft einen Basisträger für einen wenigstens eine Polsäule aufweisenden Leistungsschalter. Leistungsschalter sind elektrische Schalter, die für hohe elektrische Ströme und Spannungen ausgelegt sind, um insbesondere hohe Überlastströme und Kurzschlussströme sicher abschalten zu können. Dazu weisen Leistungsschalter eine oder mehrere Unterbrechereinheiten mit jeweils wenigstens einem bewegbaren Schaltelement zum Öffnen und Schließen eines Strompfads auf. Insbesondere bei Freiluft-Leistungsschaltern sind die Unterbrechereinheiten häufig auf Polsäulen angeordnet, die wiederum auf Basisträgern angeordnet sind. Die Polsäulen weisen in der Regel jeweils einen Stützisolator auf, durch den eine Antriebsstange zum Bewegen wenigstens eines Schaltelements einer Unterbrechereinheit geführt ist. Die Basisträger werden häufig aus Blechen gebogen, wobei ein Blech für einen Basisträger ein Blechdicke aufweist, die der Belastung des jeweiligen Basisträgers angepasst ist.

DE682030 offenbart einen Basisträger des Stands der Technik.

Der Erfindung liegt die Aufgabe zugrunde, einen Basisträger für einen wenigstens eine Polsäule aufweisenden Leistungsschalter anzugeben, der insbesondere hinsichtlich der zu seiner Herstellung verwendeten Materialmenge verbessert ist.

Die Aufgabe wird erfindungsgemäß durch einen Basisträger mit den Merkmalen des Anspruchs 1 gelöst.

Vorteilhafte Ausgestaltungen der Erfindung sind Gegenstand der abhängigen Ansprüche.

Ein erfindungsgemäßer Basisträger für einen wenigstens eine Polsäule aufweisenden Leistungsschalter umfasst eine aus einem Blech konstanter Blechdicke gefertigte Profilschiene, die für jede Polsäule eine Polsäulenöffnung aufweist, und an der Profilschiene angeordnete Verstärkungselemente, die die Profilschiene in hochbelasteten Bereichen verstärken.

Die Erfindung berücksichtigt, dass ein Basisträger nicht in allen Bereichen gleich stark belastet wird. Durch die erfindungsgemäße Anordnung von Verstärkungselementen in hochbelasteten Bereichen der Profilschiene kann die Blechdicke der Profilschiene gegenüber einem Basisträger, der keine Verstärkungselemente aufweist, reduziert werden, da die Blechdicke nicht für die hochbelasteten Bereiche des Basisträgers ausgelegt werden muss. Die Stabilität des Basisträgers kann trotz reduzierter Blechdicke gewahrt werden, da die hochbelasteten Bereiche der Profilschiene durch die Verstärkungselemente verstärkt werden. Da die Verstärkungselemente einen nur relativ geringen Materialanteil des Basisträgers ausmachen, wird durch die Reduzierung der Blechdicke der Profilschiene gegenüber einem Basisträger, der keine Verstärkungselemente aufweist, Material bei der Herstellung des Basisträgers eingespart, und somit werden auch die Herstellungskosten gesenkt.

Eine bevorzugte Ausführungsform des Basisträgers sieht vor, dass die Profilschiene mehrere Polsäulenöffnungen aufweist. Diese Ausführungsform ist also für Leistungsschalter mit mehreren Polsäulen vorgesehen. Bei Basisträgern für mehrere Polsäulen wirkt sich die Materialeinsparung durch die reduzierte Blechdicke der Profilschiene besonders vorteilhaft aus, da Basisträger für mehrere Polsäulen größere Abmessungen als Basisträgern für nur eine Polsäule aufweisen und daher eine größere Materialeinsparung ermöglichen.

Eine Ausgestaltung der Erfindung sieht vor, dass die Verstärkungselemente aus einem metallischen Werkstoff gefertigt sind. Insbesondere können die Profilschiene und die Verstärkungselemente jeweils aus einem Stahl gefertigt sein. Die Fertigung der Verstärkungselemente und der Profilschiene aus einem metallischen Werkstoff, insbesondere jeweils aus einem Stahl, ermöglicht vorteilhaft eine hohe Stabilität und eine einfache Herstellung der Verstärkungselemente und der Profilschiene.

Eine weitere Ausgestaltung der Erfindung sieht vor, dass die Verstärkungselemente mit der Profilschiene verschweißt sind. Dadurch wird eine einfach realisierbare und stabile Verbindung der Verstärkungselemente mit der Profilschiene erreicht.

Erfindungsgemäß ist auf zwei sich gegenüberliegenden Seiten jeder Polsäulenöffnung jeweils ein Verstärkungselement angeordnet. Die Erfindung berücksichtigt damit, dass die Profilschiene im Bereich einer Polsäulenöffnung besonders stark belastet wird, da sie dort eine Polsäule stützt.

Eine weitere Ausgestaltung der Erfindung sieht vor, dass jedes Verstärkungselement senkrecht von der Profilschiene absteht. Dadurch wird die Profilschiene besonders wirksam durch die Verstärkungselemente verstärkt, da die Profilschiene durch die Verstärkungselemente lokal besonders stark verdickt wird, wenn die Verstärkungselemente senkrecht von der Profilschiene abstehen.

Eine weitere Ausgestaltung der Erfindung sieht vor, dass die Profilschiene eine Oberwand, die die wenigstens eine Polsäulenöffnung aufweist, und zwei an sich gegenüberliegenden Seiten von der Oberwand nach unten abgewinkelte Seitenwände aufweist, und dass jedes Verstärkungselement sich an einer Unterseite der Oberwand zwischen den beiden Seitenwänden erstreckt und mit der Oberwand und den beiden Seitenwänden verbunden ist. Die Begriffe "oben" und "unten" beziehen sich auf den Basisträger, wenn er die wenigstens eine Polsäule trägt. Gemäß dieser Ausgestaltung ist jedes Verstärkungselement also mit der Oberwand und zwei an die Oberwand angrenzenden Seitenwänden der Profilschiene verbunden, wobei die Oberwand die wenigstens eine Polsäulenöffnung aufweist. Durch die Verbindung jedes Verstärkungselements mit den drei Wänden der Profilschiene können sich die Verstärkungselemente zur Verstärkung der Oberwand, insbesondere im Bereich jeder Polsäulenöffnung, an den Seitenwänden abstützen und gleichzeitig auch die Seitenwände verstärken. Dadurch wird eine besonders effektive Verstärkungswirkung der Verstärkungselemente erreicht.

Beispielsweise sind die Seitenwände der Profilschiene rechtwinklig von der Oberwand abgewinkelt und jedes Verstärkungselement ist als ein Verstärkungsblech ausgebildet, das die Form eines Rechtecks hat, aus dem ein Trapez herausgeschnitten ist, dessen längere Grundseite eine Rechteckseite des Rechtecks ist, wobei eine der herausgeschnittenen Rechteckseite gegenüberliegende Anliegeseite des Verstärkungsblechs an der Oberwand anliegt. Bei dieser Ausbildung der Verstärkungselemente verbreitern sich die Verstärkungselemente zu den Seitenwänden der Profilschiene hin. Dadurch wird vorteilhaft die gegenseitige Stützung der Verstärkungselemente und Seitenwände erhöht und die Verstärkungswirkung der Verstärkungselemente weiter erhöht. Außerdem wird durch die schmalere Ausführung der Verstärkungselemente in deren mittleren Bereichen gegenüber einer Ausführung der Verstärkungselemente mit konstanter Breite Material für die Herstellung der Verstärkungselemente eingespart.

Eine weitere Ausgestaltung der Erfindung sieht vor, dass jede Seitenwand einen abgekanteten Endbereich aufweist. Ferner kann jeder abgekantete Endbereich mehrere erste Bohrungen zur Durchführung von Verbindungselementen aufweisen. Die abgekanteten Endbereiche der Seitenwände können vorteilhaft genutzt werden, um den Basisträger auf Tragstielen anzuordnen und/oder an dem Basisträger weitere Komponenten des Leistungsschalters anzuordnen, beispielsweise einen Antriebsschrank mit einem Antrieb für Schaltelemente des Leistungsschalters und/oder einen Steuerschrank mit einem Steuerungssystem zur Steuerung des Leistungsschalters. Die Bohrungen in den abgekanteten Endbereichen der Seitenwänden können dabei verwendet werden, um den Basisträger durch Verbindungselemente, beispielsweise durch Schraubelemente, mit den Tragstielen und/oder den weiteren Komponenten des Leistungsschalters zu verbinden.

Eine weitere Ausgestaltung der Erfindung sieht vor, dass die Profilschiene im Bereich jeder Polsäulenöffnung mehrere um die Polsäulenöffnung herum verteilte zweite Bohrungen zur Durchführung von Verbindungselementen aufweist. Die Bohrungen im Bereich einer Polsäulenöffnung können vorteilhaft dazu verwendet werden, den Basisträger durch Verbindungselemente, beispielsweise durch Schraubelemente, mit einer Polsäule zu verbinden.

Ein erfindungsgemäßer Leistungsschalter umfasst einen erfindungsgemäßen Basisträger und wenigstens eine Polsäule, die auf dem Basisträger über einer Polsäulenöffnung des Basisträgers angeordnet ist. Die Vorteile eines erfindungsgemäßen Leistungsschalters ergeben sich aus den oben genannten Vorteilen eines erfindungsgemäßen Basisträgers.

Ausgestaltungen eines erfindungsgemäßen Leistungsschalters sehen vor, dass an dem Basisträger wenigstens ein Antriebsschrank mit einem Antrieb für wenigstens ein Schaltelement des Leistungsschalters angeordnet ist, und/oder dass der Basisträger auf wenigstens einem Tragstiel angeordnet ist. Dadurch wird der Basisträger auch als Träger für wenigstens einen Antrieb genutzt und/oder durch wenigstens einen Tragstiel in ausreichender Höhe angeordnet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: einen dreipoligen Leistungsschalter,
- FIG 2: eine erste perspektivische Darstellung eines Basisträgers,
- FIG 3: eine zweite perspektivische Darstellung des in Figur 2 gezeigten Basisträgers,
- FIG 4: eine dritte perspektivische Darstellung des in Figur 2 gezeigten Basisträgers,
- FIG 5: eine Untersicht eines Abschnitts des in Figur 2 gezeigten Basisträgers.

Einander entsprechende Teile sind in den Figuren mit denselben Bezugszeichen versehen.

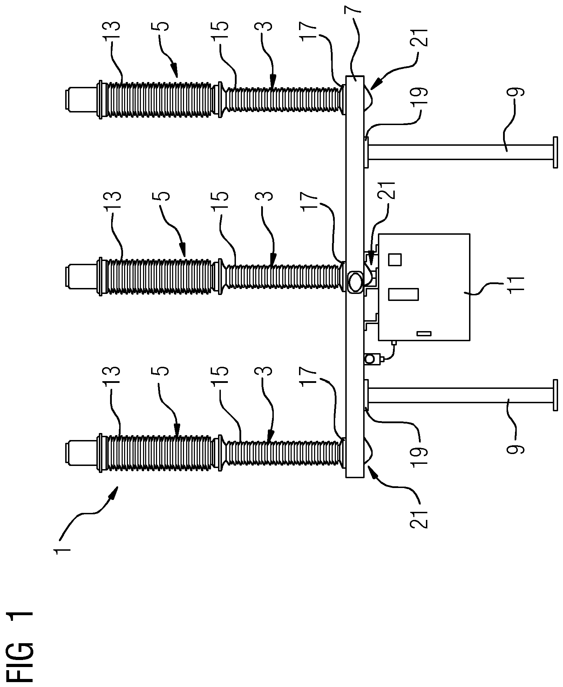

Figur 1 zeigt einen Leistungsschalter 1. Der Leistungsschalter 1 weist drei Polsäulen 3, drei Unterbrechereinheiten 5, einen Basisträger 7, zwei Tragstiele 9 und einen Antriebsschrank 11 auf.

Jede Unterbrechereinheit 5 weist ein Isoliergehäuse 13 auf, in dem eine Schaltkammer des Leistungsschalters 1 angeordnet ist. Die Isoliergehäuse 13 sind jeweils rohrartig ausgeführt und auf einer Polsäule 3 angeordnet. In der Schaltkammer jeder Unterbrechereinheit 5 ist wenigstens ein zwischen zwei Schaltstellungen bewegbares Schaltelement der Unterbrechereinheit 5 angeordnet, wobei ein Strompfad der Unterbrechereinheit 5 in einer ersten Schaltstellung des Schaltelements geöffnet und in der zweiten Schaltstellung des Schaltelements geschlossen ist.

Jede Polsäule 3 weist einen Stützisolator 15 auf, durch eine Antriebsstange zum Bewegen des wenigstens einen Schaltelements in der auf der Polsäule 3 angeordneten Unterbrechereinheit 5 geführt ist. Die Polsäulen 3 sind auf dem Basisträger 7 angeordnet und weisen jeweils einen Flansch 17 auf, der mit dem Basisträger 7 lösbar verbunden ist.

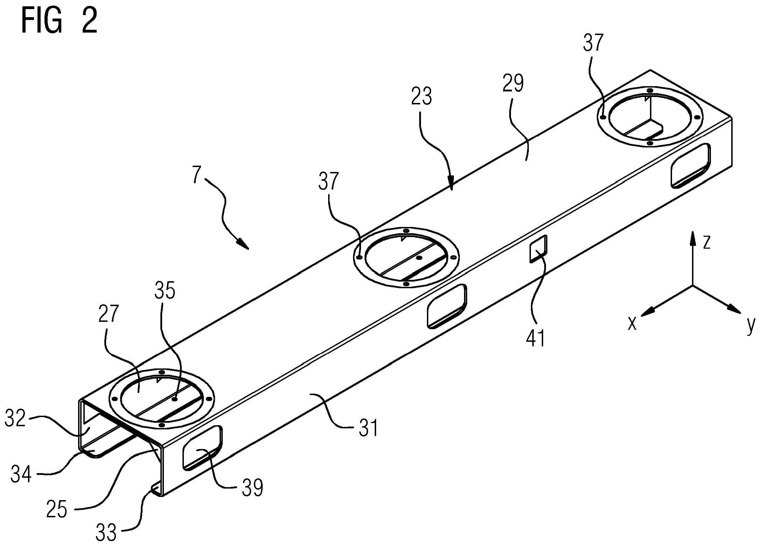

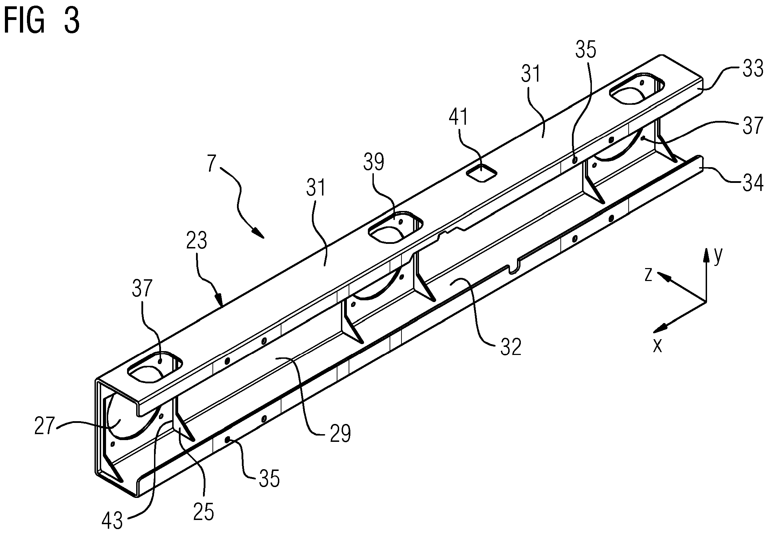

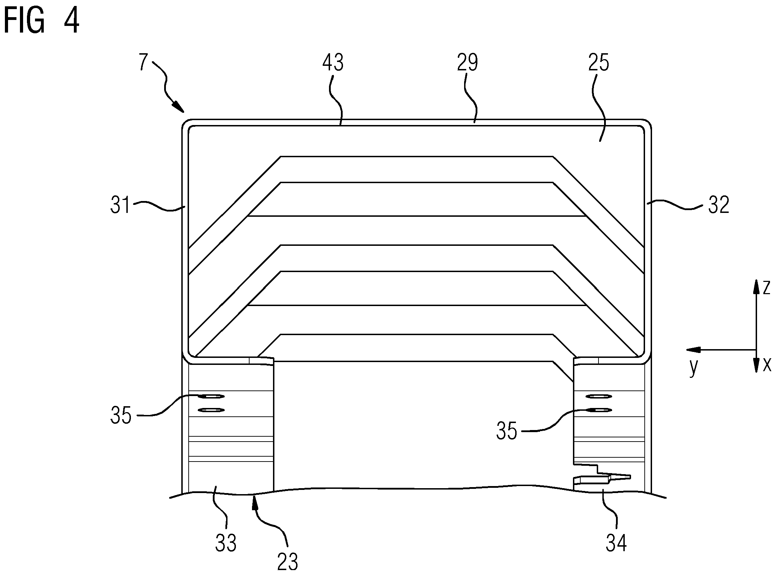

Ein Ausführungsbeispiel eines Basisträgers 7 wird unten anhand der Figuren 2 bis 5 näher beschrieben. Der Basisträger 7 ist auf den Tragstielen 9 angeordnet und mit Verbindungsplatten 19 verbunden, die jeweils ein oberes Ende eines Tragstiels 9 bilden.

Der Antriebsschrank 11 ist an einer Unterseite des Basisträgers 7 angeordnet. In dem Antriebsschrank ist ein Antrieb für die bewegbaren Schaltelemente des Leistungsschalters 1 angeordnet. Der Antrieb ist über wenigstens eine Koppelstange, die in dem Basisträger 7 geführt ist, über Umlenkgetriebe 21, die jeweils unterhalb einer Polsäule 3 angeordnet sind, mit den durch die Polsäulen 3 geführten Schaltstangen verbunden. In dem Antriebsschrank 11 kann ferner zusätzlich ein Steuerungssystem zur Steuerung des Leistungsschalters 1 angeordnet sein. Alternativ kann zusätzlich zu dem Antriebsschrank 11 ein separater Steuerschrank mit einem derartigen Steuerungssystem an dem Basisträger 7 angeordnet sein.

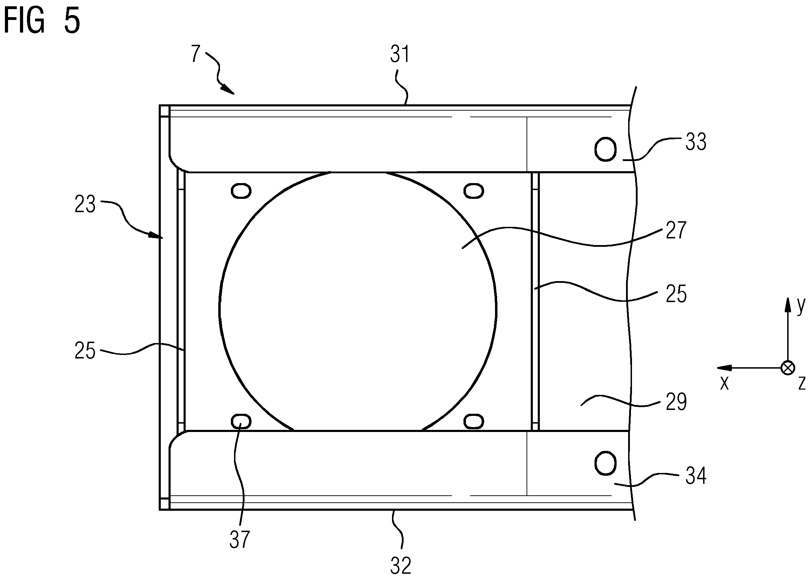

Die Figuren 2 bis 4 zeigen verschiedene perspektivische Ansichten eines Basisträgers 7 für einen dreipoligen Leistungsschalter 1. Figur 5 zeigt einen Abschnitt des Basisträgers 7 in einer Untersicht. Zum besseren Verständnis ist in den Figuren 2 bis 5 jeweils ein kartesisches Koordinatensystem mit Koordinaten X, Y, Z eingezeichnet. Der Basisträger 7 weist eine Profilschiene 23 und an der Profilschiene 23 angeordnete Verstärkungselemente 25 auf.

Die Profilschiene 23 ist aus einem Blech konstanter Blechdicke gefertigt. Sie weist für jede Polsäule 3 des Leistungsschalters 1 eine Polsäulenöffnung 27 auf.

Die Profilschiene 23 weist eine Oberwand 29, die die Polsäulenöffnungen 27 aufweist, und zwei an sich gegenüberliegenden Seiten von der Oberwand 29 rechtwinklig nach unten abgewinkelte Seitenwände 31, 32 auf. Jede Seitenwand 31, 32 weist einen rechtwinklig zu der jeweils anderen Seitenwand 31, 32 hin abgekanteten Endbereich 33, 34 auf. Die Endbereiche 33, 34 sind voneinander beabstandet, so dass die Außenseiten der Endbereiche 33, 34 eine zweiteilige Unterseite des Basisträgers 7 bilden.

Jeder abgekantete Endbereich 33, 34 weist für jeden Tragstiel 9 zwei erste Bohrungen 35 auf, durch die jeweils ein Verbindungselement, beispielsweise ein Schraubelement, führbar ist, um die Verbindungsplatte 19 des Tragstiels 9 lösbar mit dem Basisträger 7 zu verbinden. Die abgekanteten Endbereiche 33, 34 können weitere Bohrungen aufweisen, um den Antriebsschrank 11 an dem Basisträger 7 zu befestigen.

Die Profilschiene 23 weist im Bereich jeder Polsäulenöffnung 27 vier gleichmäßig um die Polsäulenöffnung 27 herum verteilte zweite Bohrungen 37 auf, durch die jeweils ein Verbindungselement, beispielsweise ein Schraubelement, führbar ist, um den Flansch 17 einer Polsäule 3 lösbar mit dem Basisträger 7 zu verbinden.

Eine erste Seitenwand 31 weist ferner drei Seitenwandöffnungen 39 auf, wobei jede Seitenwandöffnung 39 einer Polsäulenöffnung 27 zugeordnet ist und in einem die jeweilige Polsäulenöffnung 27 aufweisenden Bereich des Basisträgers 7 angeordnet ist. Ferner weist die erste Seitenwand 31 zwischen zwei der jeweils einer Polsäulenöffnung 27 zugeordneten Seitenwandöffnungen 39 eine weitere Seitenwandöffnung 41 auf. Die Seitenwandöffnungen 39, 41 sind Montageöffnungen, beispielsweise um die Koppelstange, die in dem Basisträger 7 geführt ist, zu montieren und mit den Umlenkgetrieben 21 zu verbinden.

Die Verstärkungselemente 25 sind in den Bereichen der Polsäulenöffnungen 27 angeordnet, um diese Bereiche der Profilschiene 23 zu verstärken, da diese Bereiche der Profilschiene 23 am stärksten belastet werden. Dabei ist auf zwei sich gegenüberliegenden Seiten jeder Polsäulenöffnung 27 jeweils ein Verstärkungselement 25 angeordnet, das sich an einer Unterseite der Oberwand 29 zwischen den beiden Seitenwänden 31, 32 erstreckt und mit der Oberwand 29 und den beiden Seitenwänden 31, 32 verbunden ist.

Jedes Verstärkungselement 25 ist als ein Verstärkungsblech ausgebildet, das senkrecht von der Oberwand 29 und den Seitenwänden 31, 32 absteht. Die Verstärkungsbleche haben jeweils die Form eines Rechtecks, aus dem ein Trapez herausgeschnitten ist, dessen längere Grundseite eine Rechteckseite des Rechtecks ist. Eine der herausgeschnittenen Rechteckseite gegenüberliegende Anliegeseite 43 jedes Verstärkungsblechs liegt an der Oberwand 29 an. Die an die Anliegeseite 43 grenzenden Seiten des Verstärkungsblechs liegen jeweils an einer Seitenwand 31, 32 an. Beispielsweise sind die Verstärkungsbleche jeweils an die Oberwand 29 und die Seitenwände 31, 32 geschweißt.

Die Profilschiene 23 und die Verstärkungselemente 25 sind beispielsweise jeweils aus einem Stahl gefertigt, beispielsweise aus einem Stahl, der nach dem europäischen Standard EN 10025 mit S235JR+AR oder S355J2+N bezeichnet wird.

Die Profilschiene 23 eines in den Figuren 2 bis 5 dargestellten Basisträgers 7 kann beispielsweise ein Länge von etwa 2,5 m, eine Breite von etwa 35 cm, eine Höhe von etwa 20 cm und Polsäulenöffnungen 27 mit einem Durchmesser von jeweils etwa 25 cm aufweisen. Ein Verstärkungselement 25 für eine derartige Profilschiene 23 kann beispielsweise einen Abstand von etwa 3 cm zu dem Rand der ihm benachbarten Polsäulenöffnung 27, eine Blechdicke von etwa 5 mm und einen trapezartigen Einschnitt, dessen kürzere Grundseite etwa 20 cm lang ist und dessen Höhe etwa 7 cm beträgt, aufweisen. Dies sind jedoch nur beispielhafte Angaben; die Abmessungen der Profilschiene 23 und der Verstärkungselemente 25 werden dem jeweiligen Leistungsschalter 1 und den Belastungen des Basisträgers 7 angepasst.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Basisträger (7) für einen wenigstens eine Polsäule (3) aufweisenden Leistungsschalter (1), der Basisträger (7) umfassend
- eine aus einem Blech konstanter Blechdicke gefertigte Profilschiene (23), die für jede Polsäule (3) eine Polsäulenöffnung (27) aufweist, und
- an der Profilschiene (23) angeordnete Verstärkungselemente (25), die die Profilschiene (23) in hochbelasteten Bereichen verstärken
**dadurch gekennzeichnet, dass**
auf zwei sich gegenüberliegenden Seiten jeder Polsäulenöffnung (27) jeweils ein Verstärkungselement (25) angeordnet ist.

2. Basisträger (7) nach Anspruch 1,
**dadurch gekennzeichnet, dass**
die Profilschiene (23) mehrere Polsäulenöffnungen (27) aufweist.

3. Basisträger (7) nach Anspruch 1 oder 2,
**dadurch gekennzeichnet, dass**
die Verstärkungselemente (25) aus einem metallischen Werkstoff gefertigt sind.

4. Basisträger (7) nach einem der vorhergehenden Ansprüche,
**dadurch gekennzeichnet, dass**
die Profilschiene (23) und die Verstärkungselemente (25) jeweils aus einem Stahl gefertigt sind.

5. Basisträger (7) nach einem der vorhergehenden Ansprüche,
**dadurch gekennzeichnet, dass**
die Verstärkungselemente (25) mit der Profilschiene (23) verschweißt sind.

6. Basisträger (7) nach einem der vorhergehenden Ansprüche,
**dadurch gekennzeichnet, dass**
jedes Verstärkungselement (25) senkrecht von der Profilschiene (23) absteht.

7. Basisträger (7) nach einem der vorhergehenden Ansprüche,
**dadurch gekennzeichnet, dass**
die Profilschiene (23) eine Oberwand (29), die die wenigstens eine Polsäulenöffnung (27) aufweist, und zwei an sich gegenüberliegenden Seiten von der Oberwand (29) nach unten abgewinkelte Seitenwände (31, 32) aufweist, und dass jedes Verstärkungselement (25) sich an einer Unterseite der Oberwand (29) zwischen den beiden Seitenwänden (31, 32) erstreckt und mit der Oberwand (29) und den beiden Seitenwänden (31, 32) verbunden ist.

8. Basisträger (7) nach Anspruch 7,
**dadurch gekennzeichnet, dass**
die Seitenwände (31, 32) der Profilschiene (23) rechtwinklig von der Oberwand (29) abgewinkelt sind und jedes Verstärkungselement (25) als ein Verstärkungsblech ausgebildet ist, das die Form eines Rechtecks hat, aus dem ein Trapez herausgeschnitten ist, dessen längere Grundseite eine Rechteckseite des Rechtecks ist, und dass eine der herausgeschnittenen Rechteckseite gegenüberliegende Anliegeseite (43) des Verstärkungsblechs an der Oberwand (29) anliegt.

9. Basisträger (7) nach Anspruch 7 oder 8,
**dadurch gekennzeichnet, dass**
jede Seitenwand (31, 32) einen abgekanteten Endbereich (33, 34) aufweist.

10. Basisträger (7) nach Anspruch 9,
**dadurch gekennzeichnet, dass**
jeder abgekantete Endbereich (33, 34) mehrere erste Bohrungen (35) zur Durchführung von Verbindungselementen aufweist.

11. Basisträger (7) nach einem der vorhergehenden Ansprüche,
**dadurch gekennzeichnet, dass**
die Profilschiene (23) im Bereich jeder Polsäulenöffnung (27) mehrere um die Polsäulenöffnung (27) herum verteilte zweite Bohrungen (37) zur Durchführung von Verbindungselementen aufweist.

12. Leistungsschalter (1) mit einem gemäß einem der vorhergehenden Ansprüche ausgebildeten Basisträger (7) und wenigstens einer Polsäule (3), die auf dem Basisträger (7) über einer Polsäulenöffnung (27) des Basisträgers (7) angeordnet ist.

13. Leistungsschalter (1) nach Anspruch 12,
**dadurch gekennzeichnet, dass**
an dem Basisträger (7) wenigstens ein Antriebsschrank (11) mit einem Antrieb für wenigstens ein Schaltelement des Leistungsschalters (1) angeordnet ist.

14. Leistungsschalter (1) nach Anspruch 12 oder 13,
**dadurch gekennzeichnet, dass**
der Basisträger (7) auf wenigstens einem Tragstiel (9) angeordnet ist.

## Claims

1. Base support (7) for a circuit breaker (1) having at least one pole pillar (3), the base support (7) comprising
- a profile rail (23), which is manufactured from a metal sheet of constant thickness and has a pole pillar opening (27) for each pole pillar (3),
- reinforcing elements (25), which are disposed on the profile rail (23) and reinforce the profile rail (23) in regions that are subject to high loads,
**characterized in that**
a respective reinforcing element (25) is disposed on two opposite sides of each pole pillar opening (27).

2. Base support (7) according to Claim 1,
**characterized in that**
the profile rail (23) has multiple pole pillar openings (27).

3. Base support (7) according to Claim 1 or 2,
**characterized in that**
the reinforcing elements (25) are manufactured from a metal material.

4. Base support (7) according to one of the preceding claims,
**characterized in that**
the profile rail (23) and the reinforcing elements (25) are each manufactured from a steel.

5. Base support (7) according to one of the preceding claims,
**characterized in that**
the reinforcing elements (25) are welded to the profile rail (23) .

6. Base support (7) according to one of the preceding claims,
**characterized in that**
each reinforcing element (25) protrudes perpendicularly from the profile rail (23).

7. Base support (7) according to one of the preceding claims,
**characterized in that**
the profile rail (23) has a top wall (29), which has the at least one pole pillar opening (27), and two side walls (31, 32) angled away downward on opposite sides of the top wall (29), and **in that** each reinforcing element (25) extends on a bottom side of the top wall (29) between the two side walls (31, 32) and is connected to the top wall (29) and the two side walls (31, 32).

8. Base support (7) according to Claim 7,
**characterized in that**
the side walls (31, 32) of the profile rail (23) are angled away from the top wall (29) at right angles, and each reinforcing element (25) is in the form of a reinforcing metal sheet with the shape of a rectangle out of which a trapezoid has been cut, the longer base side of which is a rectangle side of the rectangle, and **in that** an abutting side (43), opposite the cutout rectangle side, of the reinforcing metal sheet abuts the top wall (29).

9. Base support (7) according to Claim 7 or 8,
**characterized in that**
each side wall (31, 32) has a folded end region (33, 34).

10. Base support (7) according to Claim 9,
**characterized in that**
each folded end region (33, 34) has multiple first bores (35) for the passage of connecting elements.

11. Base support (7) according to one of the preceding claims,
**characterized in that**
the profile rail (23) has multiple second bores (37), which are distributed around the pole pillar opening (27) and are intended for the passage of connecting elements, in the region of each pole pillar opening (27).

12. Circuit breaker (1) having a base support (7) designed according to one of the preceding claims and at least one pole pillar (3), which is disposed on the base support (7) via a pole pillar opening (27) in the base support (7).

13. Circuit breaker (1) according to Claim 12,
**characterized in that**
at least one drive cabinet (11) having a drive for at least one switching element of the circuit breaker (1) is disposed on the base support (7).

14. Circuit breaker (1) according to Claim 12 or 13,
**characterized in that**
the base support (7) is disposed on at least one supporting stem (9) .

## Revendications

1. Support (7) de base d'un disjoncteur (1) ayant au moins une colonne (3) polaire, le support (7) de base comprenant
- un rail (23) profilé fabriqué en une tôle d'épaisseur constante, qui a, pour chaque colonne (3) polaire, une ouverture (27) de colonne polaire, et
- des éléments (25) de renfort, qui sont disposés sur le rail (23) profilé et qui renforcent le rail (23) profilé dans des parties soumises à de grandes charges,
**caractérisé en ce qu'**
un élément (25) de renfort est disposé respectivement sur deux côtés opposés de chaque ouverture (27) de colonne polaire.

2. Support (7) de base suivant la revendication 1,
**caractérisé en ce que**
le rail (23) profilé a plusieurs ouvertures (27) de colonne polaire.

3. Support (7) de base suivant la revendication 1 ou 2,
**caractérisé en ce que**
les éléments (25) de renfort sont un matériau métallique.

4. Support (7) de base suivant l'une des revendications précédentes,
**caractérisé en ce que**
le rail (23) profilé et les éléments (25) de renfort sont respectivement en un acier.

5. Support (7) de base suivant l'une des revendications précédentes,
**caractérisé en ce que**
les éléments (25) de renfort sont soudés au rail (23) profilé.

6. Support (7) de base suivant l'une des revendications précédentes,
**caractérisé en ce que**
chaque élément (25) de renfort est issu perpendiculairement du rail (23) profilé.

7. Support (7) de base suivant l'une des revendications précédentes,
**caractérisé en ce que**
le rail (23) profilé a une paroi (29) supérieure, qui a la au moins une ouverture (27) de colonne polaire, et deux parois (31, 32) latérales coudées vers le bas sur des côtés opposés de la paroi (29) supérieure, et **en ce que** chaque élément (25) de renfort s'étend sur une face inférieure de la paroi (29) supérieure, entre les deux parois (31, 32) latérales, et est relié à la paroi (29) supérieure et aux deux parois (31, 32) latérales.

8. Support (7) de base suivant la revendication 7,
**caractérisé en ce que**
les parois (31, 32) latérales du rail (23) profilé sont coudées à angle droit de la paroi (29) supérieure et chaque élément (25) de renfort est constitué sous la forme d'une tôle de renfort, qui a la forme d'un rectangle, dans laquelle est découpé un trapèze, dont le côté de base le plus long est un côté du rectangle, et **en ce qu'**un côté (43) contigu, opposé au côté du rectangle découpé, de la tôle de renfort est en contact avec la paroi (29) supérieure.

9. Support (7) de base suivant la revendication 7 ou 8,
**caractérisé en ce que**
chaque paroi (31, 32) latérale a une partie (33, 34) d'extrémité coudée.

10. Support (7) de base suivant la revendication 9,
**caractérisé en ce que**
chaque partie (33, 34) d'extrémité coudée a plusieurs premiers trous (35) pour le passage d'éléments de liaison.

11. Support (7) de base suivant l'une des revendications précédentes,
**caractérisé en ce que**
le rail (23) profilé a, pour le passage d'éléments de liaison, dans la région de chaque ouverture (27) de colonne polaire, plusieurs deuxièmes trous (37) répartis autour de l'ouverture (27) de colonne polaire.

12. Disjoncteur (1) ayant un support (7) de base constitué suivant l'une des revendications précédentes et au moins une colonne (3) polaire, qui est disposé sur le support (7) de base au-dessus d'une ouverture (27) de colonne polaire du support (7) de base.

13. Disjoncteur (1) suivant la revendication 12,
**caractérisé en ce que**
sur le support (7) de base est disposé au moins une armoire (11) de commande, ayant un entraînement d'au moins un élément de coupure du disjoncteur (1).

14. Disjoncteur (1) suivant la revendication 12 ou 13,
**caractérisé en ce que**
le support (7) de base est disposé sur au moins un poteau (9).
